# EUROPÄISCHE PATENTSCHRIFT

(11) **EP 1 291 218 B1**
(45) Veröffentlichungstag und Bekanntmachung des Hinweises auf die Patenterteilung: **16.11.2005**
(21) Anmeldenummer: 02019959.2
(22) Anmeldetag: 05.09.2002
(51) Int. Cl.: B60J 7/06

(54) **Personenkraftwagen mit aufrollbarem Verdeck**
Vehicle with a roll-up top
Véhicule avec toit enroulable

(30) Priorität: 07.09.2001 DE 10144080
(43) Veröffentlichungstag der Anmeldung: 12.03.2003
(73) Patentinhaber: ADAM OPEL AG, 65423 Rüsselsheim (DE)
(72) Erfinder: Leopold, Frank, Dipl.-Designer, 65232 Taunusstein (DE); Verhee, Patrick, Dipl.-Ing., 65428 Rüsselsheim (DE); Arndt, Stefan, 65193 Wiesbaden (DE); Köller, Dirk, Dipl.-Ing., 65474 Bischofsheim (DE)

(56) Entgegenhaltungen:
- DE-C- 4 224 297
- FR-A- 2 750 930
- US-A- 4 252 362

## Beschreibung

Die Erfindung bezieht sich auf einen Personenkraftwagen mit einem Verdeck gemäß dem Oberbegriff des Anspruchs 1.

Ein derartiges Fahrzeug ist in der FR-A-2 750 930 beschrieben. Auf einer nahe der Windschutzscheibe angebrachten Rolle ist ein Verdeck aufgerollt, das zum Verschließen der Dachöffnung bis zum Heck des Fahrzeuges gezogen werden kann. Im geschlossenen Zustand verläuft das Verdeck zunächst in Dachhöhe, knickt am hinteren Ende des Fahrzeuges nach unten ab und reicht dort bis zum Fahrzeugboden.

In der DE 197 38 281 C2 ist das folgende Fahrzeug beschrieben. Die Dachöffnung reicht von der oberen Kante der Windschutzscheibe bis zum Heckabschluss. Der vordere über dem Fahrgastraum liegende Teil der Dachöffnung wird von einem aufrollbaren Verdeck geschlossen, das auf einer an der oberen Kante der Windschutzscheibe angeordneten Rolle aufrollbar ist und das in Schienen entlang der Dachholme des Fahrzeuges verläuft. Die beiden Dachholme erstrecken sich in einem Bogen von der Windschutzscheibe bis zur sogenannten Schulterlinie des Fahrzeugs. Der hintere Teil der Dachöffnung oberhalb des Kofferraumes wird durch zwei stabile Wände geschlossen, wobei sich eine erste Wand vertikal vom Heckabschluss bis zur Schulterlinie erstreckt, während eine zweite Wand sich im Wesentlichen waagerecht erstreckt und die Lücke zwischen der ersten Wand und dem Ende des aufrollbaren Verdeckes schließt. Unter der Schulterlinie eines Fahrzeuges soll ein Horizontalschnitt verstanden werden, der im Wesentlichen eine Verlängerung der Motorhaube darstellt. Unterhalb der Schulterlinie ist das Fahrzeug mit Blechwänden versehen, während sich oberhalb der Schulterlinie die Windschutzscheibe sowie die Seiten- und Rückfenster befinden. Die Schulterlinie ist damit deutlich als Grenzlinie zwischen dem unteren Bereich der Fahrzeugkarosserie, der mit geschossenen Blechen versehen ist, und dem oberen Bereich, in dem sich die Scheiben des Fahrzeuges befinden, erkennbar.

Das leicht aufwickelbare Verdeck ermöglicht es, die Dachöffnung den jeweiligen Witterungsbedingungen anzupassen. Um die Dachöffnung vollständig freizugeben, muss aber nicht nur das Verdeck, sondern es müssen auch die beiden den Kofferraum begrenzenden Wände entfernt werden. Diese sind recht umständlich in dafür vorgesehene Kammern am Heck des Fahrzeuges zu verstauen.

Die Erfindung beruht somit auf der Aufgabe, ein Personenkraftwagen gemäß dem Oberbegriff des Anspruchs 1 zu schaffen, der einen leichteren Zugang zum Kofferraum gewährleistet, wobei vor allem das Öffnen und Schließen des Verdecks noch einfacher erfolgen kann.

Die Erfindung.sieht dazu einen Personenkraftwagen gemäß dem Oberbegriff des Anspruchs 1 vor mit den zusätzlichen Merkmalen, dass die Schienen auf Höhe der Schulterlinie, die durch die Unterkante der Windschutzscheibe des Fahrzeuges definiert ist, verlaufen. Die Erfindung kann somit genutzt werden, wenn das Verdeck entlang der Schulterlinie bis zur Frontwand im Bereich des Übergangs von der Stirnwand zur Windschutzscheibe geführt ist. Der Übergang vom vertikalen zum horizontalen Bereich erfolgt in einem Bogen. Dieser ist allein schon deswegen notwendig, weil das Verdeck, vor allem wenn es aus quer verlaufenden Lamellen zusammengesetzt ist, nicht in einem Knick umgelenkt werden kann. Je größer der Bogenradius ist, desto leichter kann das Verdeck durch den Bogen gezogen werden. Aber auch aus ästhetischen Gründen ist ein Bogenverlauf angebracht.

Ein aufrollbares Verdeck auf der Schulterlinie ist zwar aus der DE 32 07 134 C2 bekannt. Hier verläuft das Verdeck aber quer zur Fahrzeuglängsrichtung. Außerdem ist lediglich eine Abdeckung des vorderen Bereiches des Fahrgastraumes vorgesehen.

Das Fahrzeug gemäß der DE 197 38 281 C2 sieht vor, dass das Verdeck an der oberen Kante der Windschutzscheibe angeordnet, also von vorn nach hinten abgewickelt wird. Eine solche Anordnung, die die Kopffreiheit nicht einschränkt, ist nur möglich, wenn die Dachöffnung nicht vollständig verschlossen werden soll und ein relativ dünnes Stoffverdeck verwendet wird. Eine wesentlich bessere Anordnung ergibt sich, wenn die Aufwickelrolle für das Verdeck im Heckbereich des Fahrzeuges angeordnet ist. Hier steht genügend Platz zur Verfügung, um auch ein stabileres Verdeck aufgewickelt unterbringen zu können.

Zwar ist aus der EP 0 934 842 A2 eine rückwärtige Unterbringung der Aufwickelrolle vorgesehen. Diese befindet sich aber nicht im Heck des Fahrzeuges, sondern im Kofferraum, so dass das Verdeck ebenfalls lediglich nur den Fahrgastraum abdecken kann.

Um die Größe des Kofferraumes nicht zu beschränken, ist vorgesehen, dass die Aufwickelrolle unterhalb des Bodens angeordnet ist, und zwar unmittelbar hinter der Hinterachse zwischen den Hinterrädern.

Zwar kann die Aufwickelrolle selbst mit einem Antrieb versehen werden. Es hat sich aber gezeigt, dass es von Vorteil ist, eine zusätzliche Antriebsrolle vorzusehen, die parallel zur Aufwickelrolle verläuft und mit entsprechenden Rasten versehen ist, die in die Aufwickelrolle eingreifen und so in der Lage sind, diese zu transportieren.

Die Unterbringung am Boden hat weiterhin den Vorteil, dass ein Kasten, der die Aufwickelrolle einschließt, gleichzeitig als versteifender Querträger genutzt werden kann.

Das aufrollbare Verdeck verläuft in Schienen, die vom Heckbereich bis zur Frontwand zunächst in etwa vertikal und dann nach einem Bogen mit einer leichten Neigung zur Frontwand hin horizontal verlaufen, so dass sich die höchste Stelle des Verdecks am Heck des Fahrzeuges befindet. Die leichte Neigung hat den Vorteil, dass der Kraftaufwand zum Schließen der Dachöffnung nicht so groß ist, da das Verdeck zum Teil unter Ausnutzung der Schwerkraft nach vorne läuft.

Das auf dem geschlossenen Verdeck nach vorne fließende Regenwasser wird in einer Rinne aufgefangen und durch Abflüsse in den Schienen nach außen geleitet.

Die Aufnahme der Vorderkante des Verdeckes kann in einer Instrumententafel erfolgen. Diese schließt unmittelbar an die Frontwand an und ist damit ein Teil von ihr. In der Regel besitzt die Instrumententafel eine horizontal verlaufende Fläche, die auch als Ablagefläche dient. Die Aufnahme für das Verdeck kann so angeordnet sein, dass die Fläche eine Fortsetzung des Verdeckes bildet.

Typischerweise wird das Verdeck aus einer Vielzahl von schmalen Lamellen zusammengesetzt. Damit erhält man eine große Stabilität. Wenn diese Lamellen genügend hart ausgeführt und verhakend miteinander verbunden sind, ist es auch sehr schwierig, das Verdeck aufzubrechen, so dass es einen wirksamen Einbruchsschutz bietet.

Es kann aber auch daran gedacht werden, zumindest Teilbereiche des Verdeckes aus einem Tuch bestehen zu lassen. Dies hat den Vorteil, dass das Verdeck insgesamt leichter wird. Aber auch bei dieser Ausführung sollten die Randbereiche des Tuchabschnittes aus kurzen Lamellen bestehen, die allerdings in die Schienen eingehakt werden müssen, damit sie dort nicht herausfallen.

Wie weiter oben schon angedeutet, soll das Verdeck auf der Schulterlinie den Fahrgastraum abdecken. Über die Schulterlinie ragen aber der Sitz und das Lenkrad des Fahrzeuges. In der DE 32 07 134 C2 wird daher schon vorgeschlagen, die Sitze klappbar und die Lenksäule so zu gestalten, dass sie nach unten weggeklappt werden kann. Demgegenüber schlägt die Erfindung vor, dass das Lenkrad selbst verkürzbar ist, so dass es in der verkürzten Form vollständig unterhalb der Schulterlinie liegt. Eine mögliche Gestaltung eines solchen Lenkrades ist in der parallelen Patentanmeldung der Anmelderin vom selben Tag mit dem Titel "Lenkrad eines Kraftfahrzeuges mit einem Lenkradkranz" wiedergegeben.

Das gleiche gilt für den Sitz. Hier erfolgt die Verkürzung nicht durch Umklappen der Rückenlehne, sondern durch deren Verkürzung, wozu sie aus einem unteren und einem oberen Lehnenteil besteht, die in der Höhe gegeneinander verschiebbar sind. Eine mögliche Gestaltung eines solchen Sitzes ist in der parallelen Patentanmeldung der Anmelderin vom selben Tag mit dem Titel "Sitz für einen Personenkraftwagen" wiedergegeben

Es kann daran gedacht werden, die Verkürzungen von Lenkrad und Rückenlehne automatisch erfolgen zu lassen, und zwar in Verknüpfung mit der Steuerung des Verdecks, so dass - je nachdem, wie weit das Verdeck vorgefahren wird bzw. die Dachöffnung noch offen bleibt - ein Absenken bzw. Verkürzen von Lenkrad und Rückenlehne erfolgt. Selbstverständlich kann das Schließen und Öffnen des Verdecks bzw. die Verstellung von Lenkrad und Rückenlehne auch mittels einer Fernbedienung ausgelöst werden.

Im Folgenden soll anhand eines Ausführungsbeispiels die Erfindung näher erläutert werden. Dazu zeigen
- Fig. 1a bis Fig. 1c: eine perspektivische Darstellung eines Personenkraftwagens mit einem Verdeck gemäß der Erfindung, wobei das Verdeck verschiedene Positionen einnimmt;
- Fig. 2: in perspektivischer Darstellung die Anbringung einer Aufwickelrolle für das Verdeck unterhalb eines Bodenbleches des Personenkraftwagens,
- Fig. 3: einen Querschnitt durch den Personenkraftwagen,
- Fig. 4: eine perspektivische Darstellung des vorderen Bereiches des Personenkraftwagens.

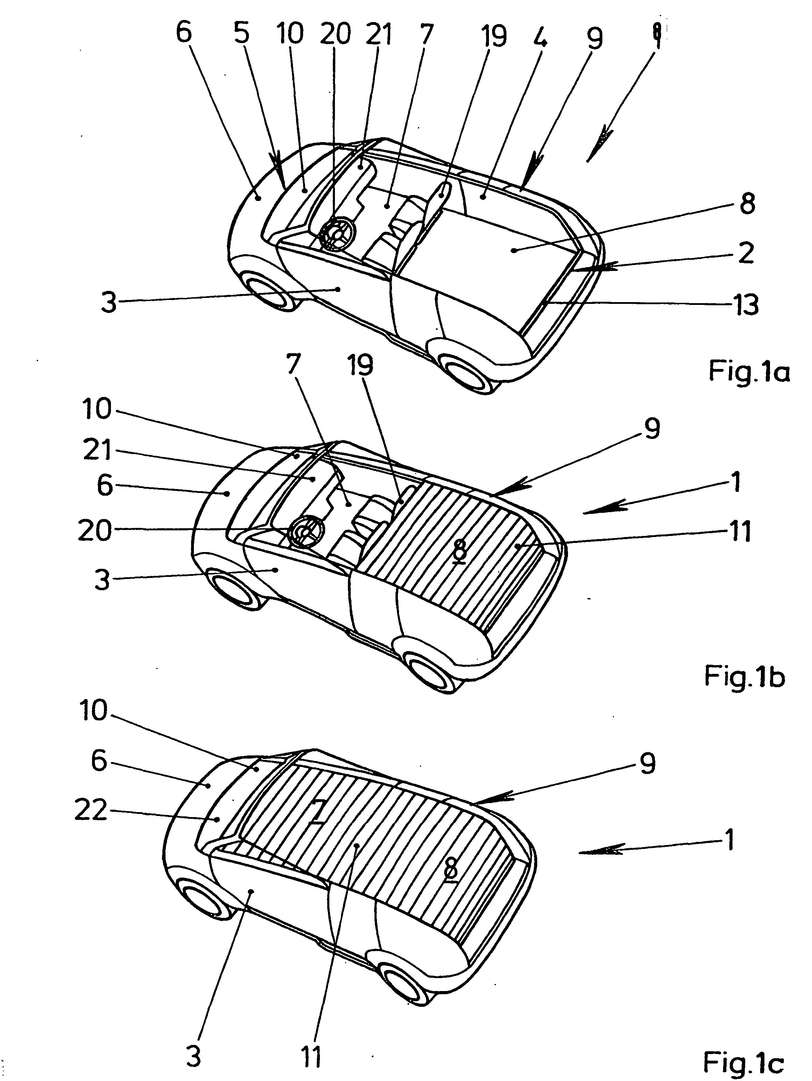

Zunächst wird auf die Figuren 1a bis 1c Bezug genommen. Die Figur 1b zeigt ein Fahrzeug 1 mit einem offenen Dach. Auf einem Fahrzeugboden 2 sind seitlich zwei Seitenwände 3, 4 sowie eine Stirnwand 5 aufgesetzt, die den Motorraum 6 vom Fahrgastraum 7 trennt. An den Fahrgastraum 7 schließt sich nach hinten ein Kofferraum 8 an.

Der obere Rand der Seitenwände 3, 4 sowie der Stirnwand 5 bildet die sogenannte Schulterlinie 9. An die Stirnwand 5 schließt sich die oberhalb der Schulterlinie 9 die Windschutzscheibe 10 an. Der Kofferraum 8 ist nach hinten offen, d.h. der rückwärtige Abschluss des Kofferraumes 8 unterhalb der Schulterlinie 9 ist bei einem erfindungsgemäßen Personenkraftwagen offen, weist also dort keine aus Teilen der Karosserie bestehende Begrenzung auf. Dies ermöglicht eine einfache Beladung

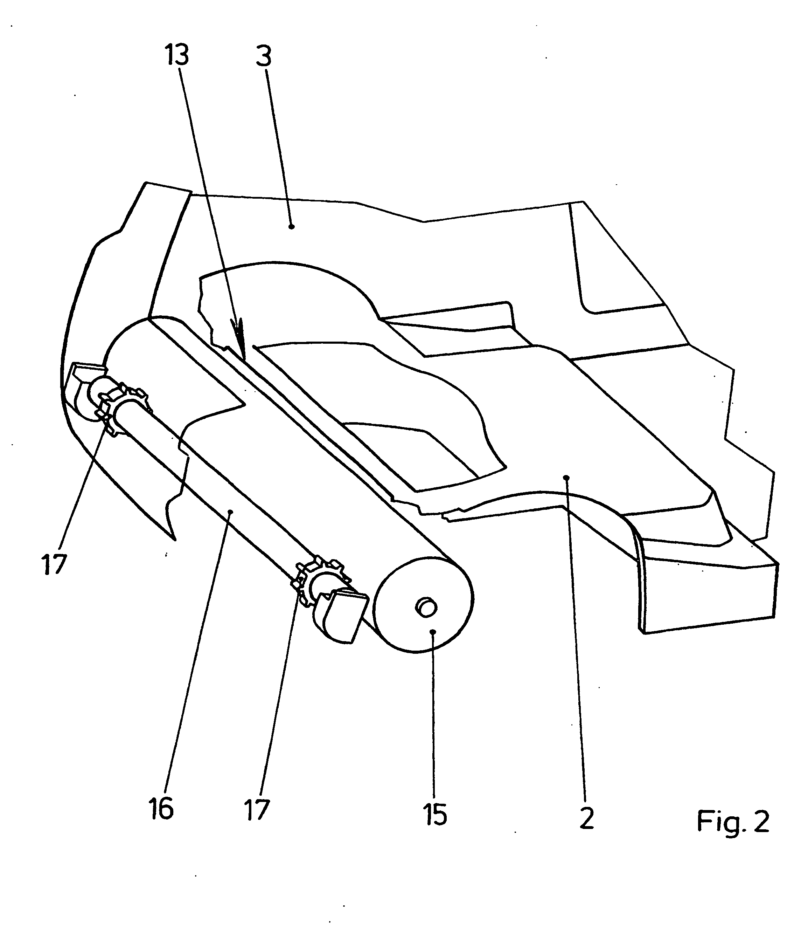

Um das Fahrzeug 1 entlang der Schulterlinie 9 schließen zu können, ist - was in Figur 2 noch näher ausgeführt wird - ein Verdeck 11 vorgesehen, das vom Heck des Fahrzeuges 1 zur Front gezogen werden kann. Dazu befinden sich Schienen 12 in den Seitenwänden 3, 4 auf Höhe der Schulterlinie 9 und in den hinteren vertikal verlaufenden Abschlusskanten der Seitenwände 3, 4. Beim Ausfahren des Verdeckes 11, was in den Figuren 1b und 1c gezeigt ist, tritt das Verdeck 11 aus einem Spalt 13 im Boden des Fahrzeuges 1 nach oben aus und wird zunächst vertikal und sodann horizontal in Schienen 12 geführt und zwar entweder bis zu den Vordersitzen, wie in Fig. 1b gezeigt, oder bis zur Front, wie Figur 1c zeigt, so dass die Dachöffnung vollständig geschlossen ist.

Je nachdem wie weit das Verdeck 11 gezogen wird, ergibt sich entweder nur eine rückwärtige Begrenzung des Kofferraumes 8, eine vollständige Abdeckung des Kofferraumes 8 oder eine vollständige Abdeckung von Koffer- und Fahrgastraum. Wenn dies auch die typischen Schließversionen sind, so lässt sich im Prinzip aber auch jede Zwischenstellung einhalten.

Wie Figur 2 zeigt, ist eine Aufwickelrolle 15 vorgesehen, die sich unterhalb des Bodens des Kofferraumes 8 befindet. In Fahrtrichtung des Fahrzeuges 1 gesehen befindet sich hinter dieser Aufwickelrolle 15 eine Antriebsrolle 16. Diese wird - was hier nicht näher dargestellt ist - von einem Elektromotor angetrieben. Auf der Antriebsrolle 16 befinden sich zwei Greifringe 17 mit Vorsprüngen, die in entsprechende Ausnehmungen des Verdeckes 11 eingreifen, um es vor oder zurück transportieren zu können. Das Verdeck 11 tritt dazu aus einem Spalt 18 im Fahrzeugboden 2 hervor und kann - wie dies die Figuren 1a bis 1c zeigen - bis zur Front des Fahrzeuges 1 transportiert werden. Die Anordnung der Aufwickelrolle 15 und der Antriebsrolle 16 kann in einem hier nicht näher dargestellten Gehäuse erfolgen, das Teil der Bodenstruktur ist und damit als die Karosserie versteifender Querträger wirkt.

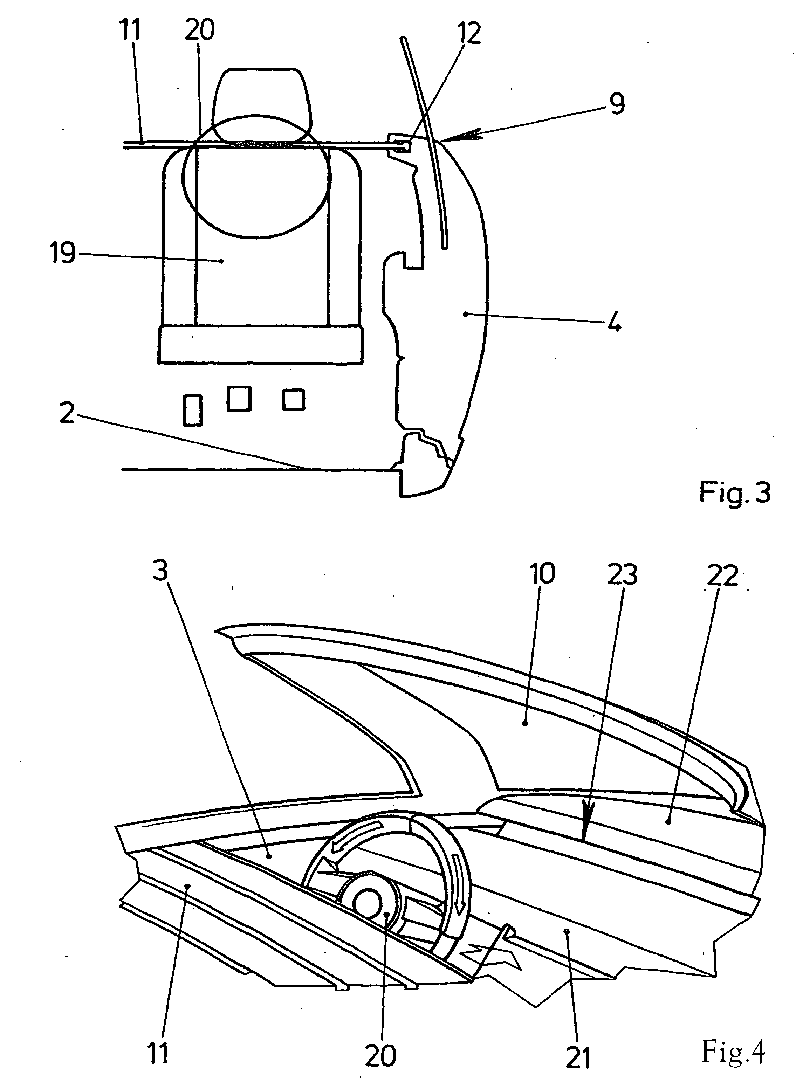

Die Figur 3 zeigt einen Querschnitt durch das Fahrzeug 1. Eine Führung für das Verdeck 11 ist schematisch angedeutet. Hierbei handelt es sich um Schienen 12 in den Seitenwänden 3, 4. Wie die Figur 3 zeigt, ragen ein Sitz 19 und das Lenkrad 20 über die Schulterlinie 9 hervor, so dass diese verkürzt werden müssen, damit das Verdeck 11 vollständig geschlossen werden kann. Dazu kann die Sitzlehne nach vorne geklappt werden oder aber - was in einer Parallelanmeldung näher erläutert ist - zweiteilig ausgeführt werden, wobei ein oberer Teil verschiebbar an einem unteren Teil der Rückenlehne gehalten ist.

Die Verkürzung des Lenkrades erfolgt durch eine Zweiteilung des Lenkradkranzes. Die in einer Normalstellung des Lenkrades oben liegenden Segmente können in Umfangsrichtung auf ein unten liegendes Segment geschoben werden.

Figur 4 zeigt den Anschluss des vollständig geschlossenen Verdeckes 11 an die Frontwand. Vor der Frontwand befindet sich eine Instrumententafel 21 mit einer vorderen flachen Ablagefläche 22. Diese weist eine Aufnahmenut 23 auf, in die der Vorderabschluss des Verdeckes 11 einschiebbar ist, so dass ein mehr oder weniger planer Übergang vom Verdeck zur Ablagefläche 22 der Instrumententafel 21 erfolgt. Der Abschluss kann gerade erfolgen oder aber auch in einem leichten Bogen entsprechend der Krümmung der Windschutzscheibe 10.

Das Verdeck 11 kann unterschiedlich ausgeführt werden. Bewährt haben sich insbesondere Lamellenstrukturen, wobei das Verdeck durch eine Vielzahl von sich quer erstreckenden Lamellen, die gelenkig miteinander verbunden sind, dargestellt ist. Es empfiehlt sich, die Lamellen stabil auszuführen, so dass das zugezogene Verdeck 11 gegebenenfalls belastet werden kann. Zum anderen dient eine stabile Verbindung der Lamellen auch dem Diebstahlschutz.

Es kann aber auch daran gedacht werden, Teile des Verdecks durch ein Tuch darzustellen. Um die Verbindung zur Schiene 11 herzustellen, besitzt dieses Tuch an den Seiten kurze Lamellen, die allerdings - um die Stabilität zu gewährleisten - in diesem Fall verhakend in den Führungen eingesetzt werden müssen, damit sie aus diesen nicht herausrutschen.

### Bezugszeichenliste

- 1: Fahrzeug
- 2: Boden
- 3: Seitenwand
- 4: Seitenwand
- 5: Stirnwand

- 6: Motorraum
- 7: Fahrgastraum
- 8: Kofferraum
- 9: Schulterlinie
- 10: Windschutzscheibe

- 11: Verdeck
- 12: Schiene
- 13: Spalt

- 15: Aufwickelrolle
- 16: Antriebsrolle
- 17: Greifringe
- 19: Sitz
- 20: Lenkrad

- 21: Instrumententafel
- 22: Ablagefläche
- 23: Aufnahmenut

## Patentansprüche

1. Personenkraftwagen mit einem mindestens einen Sitz aufweisenden Fahrgastraum (7) und einem sich daran anschließenden, nach hinten offenen Kofferraum (8) im Heckbereich des Personenkraftwagens, wobei der Fahrgastraum (7) und der Kofferraum (8) unten von einem Boden (2) mit einem Heckabschluss, seitlich von Seitenwänden (3, 4) und vorne von einer Frontwand , die u.a. aus einer Stirnwand und einer sich nach oben anschließenden Windschutzscheibe (10) besteht, begrenzt sind, wobei die Seitenwände, die Frontwand und der Heckabschnitt eine verschließbare Dachöffnung einrahmen und wobei die Seitenwände (3, 4) zwei parallel verlaufende Schienen (12) für ein aufrollbares Verdeck (11) aufweisen, das die Dachöffnung zumindest oberhalb des Fahrgastraumes (7) zu verschließen vermag, wobei das Verdeck (11) im ausgerollten Zustand von der Frontwand bis zum Heckabschnitt des Bodens (2) reicht und **dadurch** die Dachöffnung durch einen im Wesentlichen horizontal verlaufenden Abschnitt und durch einen im Wesentlichen vertikalen, sich an den Heckabschluss anschließenden Abschnitt vollständig verschließt, **dadurch gekennzeichnet, dass** die Schienen (12) auf Höhe der Schulterlinie (9), die durch die Unterkante der Windschutzscheibe (10) des Fahrzeuges definiert ist, verlaufen.

2. Personenkraftwagen nach Anspruch 1, **dadurch gekennzeichnet, dass** das aufrollbare Verdeck (11) auf eine Aufwickelrolle aufwickelbar ist, die im Heckbereich des Fahrzeuges (1) angeordnet ist.

3. Personenkraftwagen nach Anspruch 2, **dadurch gekennzeichnet, dass** die Aufwickelrolle (15) unterhalb des Bodens (2) angeordnet ist.

4. Personenkraftwagen nach Anspruch 3, **dadurch gekennzeichnet, dass** parallel zur Aufwickelrolle (15) eine Antriebsrolle (16) verläuft.

5. Personenkraftwagen nach Anspruch 3 oder 4, **dadurch gekennzeichnet, dass** die Aufwickelrolle (15) unmittelbar hinter der Hinterachse zwischen den Hinterrädern angeordnet ist.

6. Personenkraftwagen nach Anspruch 3, 4 oder 5, **dadurch gekennzeichnet, dass** die Aufwickelrolle (15) in einem Kasten angeordnet ist, der an der Unterseite des Bodens (2) befestigt ist und als ein den Boden (2) versteifenden Querträger fungiert.

7. Personenkraftwagen nach einem der vorhergehenden Ansprüche, **dadurch gekennzeichnet, dass** die Schienen (12) vom Heckbereich bis zur Frontwand zunächst in etwa vertikal und dann - mit einer leichten Neigung zur Frontwand hin - horizontal verlaufen.

8. Personenkraftwagen nach einem der vorhergehenden Ansprüche, **dadurch gekennzeichnet, dass** der Frontwand eine Instrumententafel (21) vorgelagert ist, die eine Aufnahme für den vorderen Abschluss des Verdecks (11) aufweist.

9. Personenkraftwagen nach Anspruch 8, **dadurch gekennzeichnet, dass** die Instrumententafel (21) eine in der Ebene des geschlossenen Verdeckes sich erstreckende Fläche zwischen dem Abschluss und der Unterkante der Windschutzscheibe (10) aufweist.

10. Personenkraftwagen nach einem der vorhergehenden Ansprüche, **dadurch gekennzeichnet, dass** das Verdeck (11) aus einer Vielzahl von schmalen Lamellen zusammengesetzt ist.

11. Personenkraftwagen nach Anspruch 10, **dadurch gekennzeichnet, dass** zumindest ein Teilbereich des Verdeckes (11) aus einem Tuch besteht, dessen seitliche Ränder mit kurzen Lamellen versehen sind, die in den Schienen (12) eingehakt sind.

12. Personenkraftwagen nach Anspruch 1, **dadurch gekennzeichnet, dass** im Fahrgastraum (7) ein Lenkrad (20) angeordnet ist, das teilweise über die Schulterlinie (9) nach oben hervorragt und dass das Lenkrad derart verkürzbar ist, dass es in der verkürzten Form vollständig unterhalb der Schulterlinie (9) liegt.

13. Personenkraftwagen nach Anspruch 1, **dadurch gekennzeichnet, dass** der Sitz (19) teilweise über die Schulterlinie (9) nach oben hervorragt und dass der Sitz (19) derart verkürzbar ist, dass er in der verkürzten Form vollständig unterhalb der Schulterlinie (9) liegt.

14. Personenkraftwagen nach Anspruch 13, **dadurch gekennzeichnet, dass** der Sitz (19) über eine zweigeteilte Lehne verfügt, wobei ein unteres Lehnenteil an der Sitzfläche angeordnet ist und ein oberes Lehnenteil in der Höhe verschiebbar am unteren Lehnenteil gehalten ist.

15. Personenkraftwagen nach einem der vorhergehenden Ansprüche, **dadurch gekennzeichnet, dass** das Verdeck (11) in verschiedenen Positionen arretierbar ist, dass es über einen Antrieb verfügt, um es in die verschiedenen Positionen zu bringen, und dass zur Verkürzung von Sitz (19) und/oder Lenkrad (20) ebenfalls Antriebe vorgesehen sind, deren Steuerung mit dem Antrieb für das Verdeck (11) unter Berücksichtigung der arretierten Position gekoppelt ist.

16. Personenkraftwagen nach einem der vorhergehenden Ansprüche, **dadurch gekennzeichnet, dass** die Schienen (12) vom Heckbereich bis zur Frontwand zunächst etwa vertikal und dann nach einem Bogen mit einer leichten Neigung zur Frontwand hin horizontal verlaufen.

17. Personenkraftwagen nach einem der vorhergehenden Ansprüche, **dadurch gekennzeichnet, dass** zwischen dem etwa vertikal verlaufenden Abschnitt des Verdecks und dem etwa horizontal verlaufenden Abschnitt des Verdecks ein Bogenabschnitt vorgesehen ist.

## Claims

1. Passenger car with a passenger compartment (7), which comprises at least one seat, and an adjoining luggage compartment (8), which is open towards the rear, in the rear region of the passenger car, wherein the passenger compartment (7) and the luggage compartment (8) are bounded at the bottom by a floor (2) with a rear edge, at the sides by side walls (3, 4) and at the front by a front wall consisting, inter alia, of an end wall and a windscreen (10) adjoining at the top, wherein the side walls, the front wall and the rear portion border a closable roof opening, and wherein the side walls (3, 4) comprise two rails (12) extending in parallel for a roll-up top (11) which can close the roof opening at least above the passenger compartment (7), wherein the top (11) extends from the front wall to the rear portion of the floor (2) in the unrolled state and thereby completely closes the roof opening by means of a substantially horizontally extending portion and by means of a substantially vertical portion adjoining the rear edge, **characterised in that** the rails (12) extend on a level with the shoulder line (9), which is defined by the lower edge of the windscreen (10) of the vehicle.

2. Passenger car according to Claim 1, **characterised in that** the roll-up top (11) can be rolled onto a take-up roller which is disposed in the rear region of the vehicle (1).

3. Passenger car according to Claim 2, **characterised in that** the take-up roller (15) is disposed underneath the floor (2).

4. Passenger car according to Claim 3, **characterised in that** a drive roller (16) extends parallel to the take-up roller (15).

5. Passenger car according to Claim 3 or 4, **characterised in that** the take-up roller (15) is disposed directly behind the rear axle between the rear wheels.

6. Passenger car according to Claim 3, 4 or 5, **characterised in that** the take-up roller (15) is disposed in a box which is fastened to the underside of the floor (2) and acts as a cross member which reinforces the floor (2).

7. Passenger car according to any one of the preceding Claims, **characterised in that** the rails (12) extend from the rear region to the front wall initially approximately vertically and then - with a slight inclination towards the front wall - horizontally.

8. Passenger car according to any one of the preceding Claims, **characterised in that** a dashboard (21) is mounted in front of the front wall, which dashboard comprises a holding fixture for the front edge of the top (11).

9. Passenger car according to Claim 8, **characterised in that** the dashboard (21) comprises an area between the edge of the top and the lower edge of the windscreen (10) which extends in the plane of the closed top.

10. Passenger car according to any one of the preceding Claims, **characterised in that** the top (11) is composed of a plurality of narrow slats.

11. Passenger car according to Claim 10, **characterised in that** at least a sub-region of the top (11) consists of a fabric member, the lateral edges of which are provided with short slats which are hooked into the rails (12).

12. Passenger car according to Claim 1, **characterised in that** there is disposed in the passenger compartment (7) a steering wheel (20), which projects upwards partly beyond the shoulder line (9), and that the steering wheel can be shortened such that it lies completely below the shoulder line (9) in the shortened form.

13. Passenger car according to Claim 1, **characterised in that** the seat (19) projects upwards partly beyond the shoulder line (9), and that the seat (19) can be shortened such that it lies completely below the shoulder line (9) in the shortened form.

14. Passenger car according to Claim 13, **characterised in that** the seat (19) has a two-part backrest, wherein a lower backrest part is disposed on the seat surface and an upper backrest part is retained at the lower backrest part so as to be vertically displaceable.

15. Passenger car according to any one of the preceding Claims, **characterised in that** the top (11) can be locked in different positions, that it has a drive for bringing it into the different positions, and that drives are likewise provided to shorten the seat (19) and/or the steering wheel (20), the control of which drives is coupled to the drive for the top (11), taking account of the locked position.

16. Passenger car according to any one of the preceding Claims, **characterised in that** the rails (12) extend from the rear region to the front wall initially approximately vertically and then, after a curve with a slight inclination towards the front wall, horizontally.

17. Passenger car according to any one of the preceding Claims, **characterised in that** a curved portion is provided between the approximately vertically extending portion of the top and the approximately horizontally extending portion of the top.

## Revendications

1. Voiture de tourisme comportant un habitacle (7) présentant au moins un siège et un coffre (8) ouvert vers l'arrière, connecté à celui-ci dans la zone arrière de la voiture de tourisme, tandis que l'habitacle (7) et le coffre (8) sont délimités au-dessous par un plancher (2) avec une fermeture arrière, latéralement par des parois latérales (3, 4) et devant par une paroi frontale, constituées par une paroi frontale et une vitre de pare-brise (10) connectée vers le haut, alors que les parois latérales, la paroi frontale et le tronçon arrière englobent une ouverture de toiture obturable et tandis que les parois latérales (3, 4) présentent deux glissières parallèles (12) pour une capote enroulable (11), qui permet de refermer l'ouverture de toiture au moins au-dessus de l'habitacle (7) tandis que la capote (11) s'étend en condition déroulée de la paroi frontale au tronçon arrière du plancher (2) et referme ainsi complètement l'ouverture de toiture par une portion sensiblement horizontale et une portion sensiblement verticale, se raccordant à l'arête arrière, **caractérisée en ce que** les glissières (12) s'étendent à hauteur de la ligne d'épaule (9) qui est définie par l'arête inférieure de la vitre de pare-brise (10) de la voiture.

2. Voiture de tourisme selon la revendication 1, **caractérisée en ce que** la capote enroulable (11) est susceptible de s'enrouler sur un rouleau de réception, disposé dans la zone arrière de la voiture (1).

3. Voiture de tourisme selon la revendication 2, **caractérisée en ce que** le rouleau de réception (15) est disposé sous le plancher (2).

4. Voiture de tourisme selon la revendication 3, **caractérisé en ce qu'**un rouleau d'entraînement (16) s'étend parallèlement au rouleau de réception (15).

5. Voiture de tourisme selon la revendication 3 ou 4, **caractérisée en ce que** le rouleau de réception (15) est disposé directement derrière l'essieu arrière entre les roues arrière.

6. Voiture de tourisme selon la revendication 3, 4 ou 5, **caractérisé en ce que** le rouleau de réception (15) est disposé dans un boîtier qui est fixé sur la face inférieure du plancher (2) et fait office d'entretoise transversale rigidifiant le plancher (2).

7. Voiture de tourisme selon l'une des revendications précédentes, **caractérisée en ce que** les glissières (12) s'étendent de la zone arrière à la paroi frontale, d'abord verticalement puis horizontalement, avec une légère inclinaison vers la paroi frontale.

8. Voiture de tourisme selon l'une des revendications précédentes, **caractérisée en ce que** la paroi frontale est précédée d'un tableau de bord (21) présentant un évidement de réception pour l'arête de bord avant de la capote (11).

9. Voiture de tourisme selon la revendication 8, **caractérisée en ce que** le tableau de bord (21) comprend une surface s'étendant dans le plan de la capote fermée, entre l'arête de bord et l'arête inférieure de la vitre de pare-brise (10).

10. Voiture de tourisme selon l'une des revendications précédentes, **caractérisée en ce que** la capote (11) se compose d'un grand nombre de lamelles étroites assemblées.

11. Voiture de tourisme selon la revendication 10, **caractérisée en ce qu'**au moins une partie de la capote (11) est constituée d'une toile dont les bords latéraux sont pourvus de courtes lamelles qui sont accrochées dans les glissières (12).

12. Voiture de tourisme selon la revendication 1, **caractérisée en ce que** l'habitacle (7) comporte un volant (20) dépassant partiellement au-dessus de la ligne d'épaule (9) vers le haut et **en ce que** le volant est rétractable, de sorte qu'une fois rétracté, il se trouve complètement en dessous de la ligne d'épaule (9).

13. Voiture de tourisme selon la revendication 1, **caractérisée en ce que** le siège (19) dépasse partiellement au-dessus de la ligne d'épaule (9) vers le haut et **en ce que** le siège (19) est rétractable de sorte que sous la forme rétractée, il se trouve complètement au-dessous de la ligne d'épaule.

14. Voiture de tourisme selon la revendication 13, **caractérisée en ce que** le siège (19) comporte un dossier en deux parties, une partie inférieure étant disposée au niveau de la surface d'assise et une partie supérieure, maintenue contre la partie inférieure, étant susceptible de coulisser en hauteur.

15. Voiture de tourisme selon l'une des revendications précédentes, **caractérisée en ce que** la capote (11) peut se fixer dans différentes positions, **en ce qu'**elle dispose d'un système d'entraînement pour l'amener dans ces différentes positions, et **en ce que** des systèmes d'entraînement sont également prévus pour rétracter le siège (19) et/ou le volant (20), systèmes dont la commande est couplée au système d'entraînement de la capote (11) en tenant compte de la position d'arrêt.

16. Voiture de tourisme selon l'une des revendications précédentes, **caractérisée en ce que** les glissières (12) s'étendent de la partie arrière à la paroi frontale d'abord de façon sensiblement verticale, et ensuite horizontalement avec une faible inclinaison vers la paroi frontale.

17. Voiture de tourisme selon l'une des revendications précédentes, **caractérisée en ce qu'**un tronçon arqué est prévu entre le tronçon courant de façon sensiblement verticale de la capote et le tronçon courant de façon sensiblement horizontale de la capote.
